# EUROPEAN PATENT SPECIFICATION

(11) **EP 3 299 612 B1**
(45) Date of publication and mention of the grant of the patent: **27.11.2019**
(21) Application number: 17191172.0
(22) Date of filing: 14.09.2017
(51) Int. Cl.: F03B 17/06, B63B 22/26, B63B 21/50, B63B 22/24

(54) **IMPROVED ANCHORING SYSTEM FOR A SUBMARINE ELECTRIC POWER GENERATOR AND CORRESPONDING SUBMARINE ELECTRIC POWER PRODUCTION PLANT**
VERBESSERTES VERANKERUNGSSYSTEM FÜR EINEN UNTERWASSERSTROMGENERATOR UND ZUGEHÖRIGE UNTERWASSERSTROMERZEUGUNGSANLAGE
SYSTÈME D'ANCRAGE AMÉLIORÉ POUR GÉNÉRATEUR DE PUISSANCE ÉLECTRIQUE SOUS-MARINE ET INSTALLATION DE PRODUCTION D'ÉNERGIE ÉLECTRIQUE SOUS-MARINE

(30) Priority: 21.09.2016 IT 201600094920
(43) Date of publication of application: 28.03.2018
(73) Proprietor: N.T.A. S.R.L., 30172 Mestre (VE) (IT)
(72) Inventor: SCARAMUZZA, Mauro, 30172 Mestre (VE) (IT)
(74) Representative: Botti, Mario

(56) References cited:
- EP-A1- 2 518 310
- WO-A1-2011/104413
- WO-A2-2014/176708
- US-A- 4 219 303
- US-A- 5 431 589
- US-A1- 2010 232 962

## Description

### Field of application

The present invention refers to an anchoring system for a submarine electric power generator.

In particular, the present invention refers to an anchoring system for a submarine electric power generator comprising a body and an anchoring cable, which is associated with the body and is apt to connect the anchoring system to the generator. The following description is made with reference to this field of application with the sole purpose of simplifying the exposition thereof.

### Prior art

As it is well known in this specific technical field, a submarine electric power generator is a system capable of converting the energy of the sea (or river) currents into electric power. In particular, once the generator has been immersed in water, the sea current causes the rotation of a propeller included within the generator itself, the rotation shaft of the propeller transferring the rotational mechanical energy to an alternator connected thereto, thus transforming the water flow energy that strikes the propeller into electric power.

The sea currents are a potentially unlimited and non-polluting renewable source of energy. Furthermore, such a source of energy is not affected either by weather conditions (unlike wind power systems and photovoltaic systems) or by day/night succession (unlike the photovoltaic systems). As a result, the energy of the sea currents is constantly available, the exploitation of which is therefore suitable for managing complex energy distribution systems.

Furthermore, a submarine electric power generator has a substantially null environmental impact.

In general, a submarine electric power production plant comprises two main components: the above-described submarine electric power generator and an anchoring system connected to the generator and apt to anchor it to the seabed.

It is known to manufacture the anchoring system as a non-floating heavy material block capable of lying on the seabed, dragging the generator connected to it by means of an anchoring cable. In such a known solution, the anchoring system is a "dead body" simply resting on the seabed and able to hold the generator at a desired depth by means of the anchoring cable, the length of the anchoring cable varying depending on the desired depth for the generator.

For instance, the length of the anchoring cable is sized so that the generator, once immersed in water, is at a depth where there is the greatest current, the weight of the anchoring system being such as to ensure the stable positioning of the generator when it is immersed in the center of the current.

Usually, the anchoring cable is used both for the set-up of the generator and of the anchoring system and for transporting the energy produced by the generator towards a ground station.

The above-described known solution has the drawback that, once lying on the seabed, the recovery of such an anchoring system is complicated, especially in case of deep seabed. A recovery of the anchoring system is for example necessary in case of breakage of the anchoring cable, followed by an uncontrolled re-surfacing of the generator, or in case it is necessary to make the generator re-surface for the maintenance and/or repositioning thereof, the recovery occurring by means of a suitable equipment, such as a winch.

Another known solution is disclosed in WO 2011/104413 A1.

Therefore, the main problem of the known solutions is that they require great efforts and economic investments both for the positioning of the generator (and thus for its anchoring to the seabed) and for the possible recovery of the plant consisting of the generator and the anchoring system.

The technical problem of the present invention is to provide an anchoring system for a submarine electric power generator having structural and functional features such as to allow overcoming the limitations and drawbacks still affecting the known solutions, in particular an anchoring system that can be easily positioned on a seabed, thus ensuring an easy positioning of the generator connected thereto, as well as an easy recovery thereof even in case of breakage of the anchoring cable.

### Summary of the invention

The solution idea underlying the present invention is to provide an anchoring system for a submarine electric power generator having a semi-floating body and comprising a first tank, whose filling with water allows the immersion of such an anchoring system and whose filling with compressed air (with the consequent expulsion of water) allows its surfacing, the filling with compressed air possibly occurring by means of a second tank installed on such an anchoring system.

Based on this solution idea, the above technical problem is solved by an anchoring system for a submarine electric power generator, such an anchoring system comprising a semi-floating body and an anchoring cable, which is associated with that body and is apt to connect the anchoring system to the generator, the anchoring system comprising at least one first tank which extends along a longitudinal axis and is housed in the body, the at least one first tank being provided with at least one first opening apt to enable the feeding of water into the at least one first tank and with at least one second opening apt to enable the feeding of compressed air into the at least one first tank by means of a compressed air feeding system, such an anchoring system being characterized in that the compressed air feeding system comprises at least one second tank containing compressed air, the at least one second tank being connected to the at least one first tank and being apt to feed compressed air directly into the at least one first tank, wherein such an at least one second tank is arranged around the first tank.

More in particular, the invention comprises the following additional and optional features, taken individually or, if necessary, in combination.

According to an aspect of the invention, the compressed air feeding system may also comprise a compressed air feeding line apt to feed compressed air into the at least one first tank.

According to another aspect of the invention, the at least one first tank may have a cylindrical shape and the at least one second tank may be in the form of a tube bundle comprising a plurality of tubes arranged around the at least one first tank, the tubes of the tube bundle of the at least one second tank having their longitudinal axes parallel to each other and parallel to the longitudinal axis of the at least one first tank.

Furthermore, each of the tubes of the tube bundle of the second tank may be held in position by at least one ring, which surrounds the at least one first tank and is fastened to the outer surface thereof, the circular crown of the at least one ring comprising a plurality of holes apt to house the tubes of the at least one second tank, those holes being arranged in an angular configuration that is radially symmetrical with respect to the longitudinal axis of the first tank, so that the tubes of the at least one second tank are radially equispaced.

According to yet another aspect of the invention, the anchoring system can comprise a plurality of supporting structures apt to ensure the support of such an anchoring system to a seabed, those supporting structures protruding from a face of the body, this face facing the seabed.

The supporting structures can be integral to the body, or can be housed in holes formed in the body, in which holes they are held by means of a spring-release system, or can be telescopic.

According to yet another aspect of the invention, the anchoring cable may comprise at least one first cable and at least one second cable independent of each other, one of the first cable and the second cable having a length greater than the length of the other one of the first cable and the second cable.

Furthermore, the body can be made of a material selected from concrete or steel, preferably concrete.

It is also observed that the at least one first tank can be made of a metal material, preferably steel, the at least one second tank can be made of steel, and the at least one ring can be made of a metal material, preferably steel.

It is also observed that the anchoring system can comprise an operating cable connecting the anchoring system to the generator and to a ground station, the operating cable comprising means apt to send control signals to the anchoring system, as well as cables apt to transport the generated electrical power.

Furthermore, the operating cable can comprise the compressed air feeding line.

According to another aspect of the invention, the anchoring system can further comprise wireless reception/transmission means apt to receive and send wireless signals, those reception/transmission means being apt to command the feeding of compressed air into the at least one first tank by receiving a driving signal of suitable valves, those valves having a compressed air actuator, and/or being adapted to monitor, to command and to control operating parameters of the anchoring system.

Finally, according to yet another aspect of the invention, the anchoring system can further comprise a casing, which is connected to the body and is apt to cover the at least one first tank and the at least one second tank acting as a protection structure.

The present invention also relates to a submarine plant for the production of electric power comprising at least one submarine electric power generator and at least one anchoring system as the one previously described, the generator being anchored to a seabed by means of that anchoring system.

In particular, the generator can comprise at least:
- a main body, which extends along a longitudinal axis defining a cavity therein and is provided with two openings that are opposite along the longitudinal axis of the main body, those openings allowing the passage of a fluid flow within the cavity;
- a containment body included in the main body, the containment body extending along the longitudinal axis of the main body between a first end portion and a second end portion, the containment body in turn including at least one alternator; and
- at least one propeller that is arranged to rotate about the containment body and causes the rotation of the rotation axis of the at least one alternator.

According to an aspect of the invention, the generator can comprise a pair of alternators, a first propeller and a second propeller, which are arranged to rotate about the containment body with their rotation axis coinciding with the longitudinal axis of the main body, the first propeller and the second propeller being contra-rotating.

According to another aspect of the invention, the generator can further comprise a plurality of wings arranged between the first propeller and the second propeller, those wings being shaped and suitably arranged so as to allow the fluid flow to recover the parallelism with the rotation axis of the propellers while flowing between those propellers.

Finally, the generator can further comprise a first fin extending from the main body, a ballast fixed at one end portion of the first fin, as well as a plurality of second fins connected to the first fin or to the main body, the first fin, the ballast and the second fins being apt to spatially stabilize the generator.

The features and advantages of the anchoring system of the present invention will become apparent from the following description of an embodiment thereof, given by way of non-limiting example with reference to the accompanying drawings.

### Brief description of the drawings

In these drawings:
- figure 1 schematically shows a submarine electric power generator connected to an anchoring system according to the present invention;
- figure 2A schematically shows a front view of the anchoring system of the present invention;
- figure 2B schematically shows a lateral view of the anchoring system of figure 2A;
- figure 3A schematically shows a first opening and respective valves of a first tank of the anchoring system of the present invention;
- figure 3B schematically shows a section view of an operating cable connected to the anchoring system of the present invention;
- figure 4A shows a schematic view of the submarine electric power generator connected to the anchoring system of the present invention; and
- figure 4B schematically shows a front view of the submarine electric power generator connected to the anchoring system of the present invention.

### Detailed description

With reference to those figures, an anchoring system for a submarine electric power generator according to the present invention is globally and schematically indicated by the reference number 1.

It is worth noting that the figures represent schematic views and are not drawn to scale, but instead they are drawn so as to emphasize the important features of the invention. Moreover, in the figures, the different elements are depicted in a schematic manner, their shape varying depending on the application desired. Finally, it is noted that in the figures the same reference numbers refer to elements that are identical in shape or function.

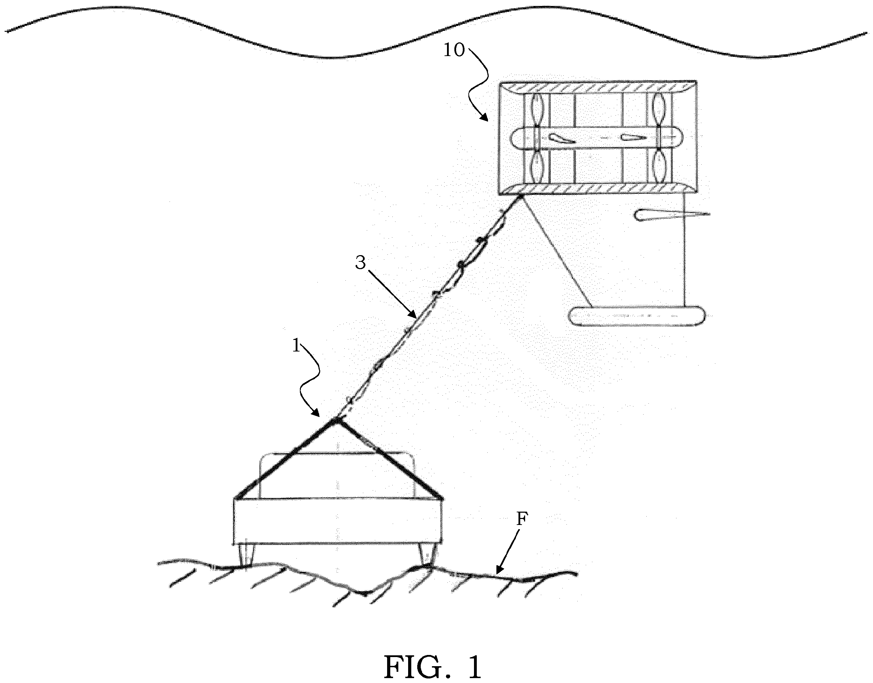

As shown in figure 1, the anchoring system 1 is apt to anchor a submarine electric power generator 10 to a seabed F (or a riverbed), the generator 10 producing electric power by exploiting the energy of the sea currents (or river currents) as described in the prior art section.

As it will be described in detail in the following, the anchoring system 1 ensures the immersion in water and the anchoring to the seabed F of the generator 10, dragging it in depth under the action of its own weight, as well as it ensures its controlled re-surfacing, for instance in case maintenance or displacement of the generator 10 are needed.

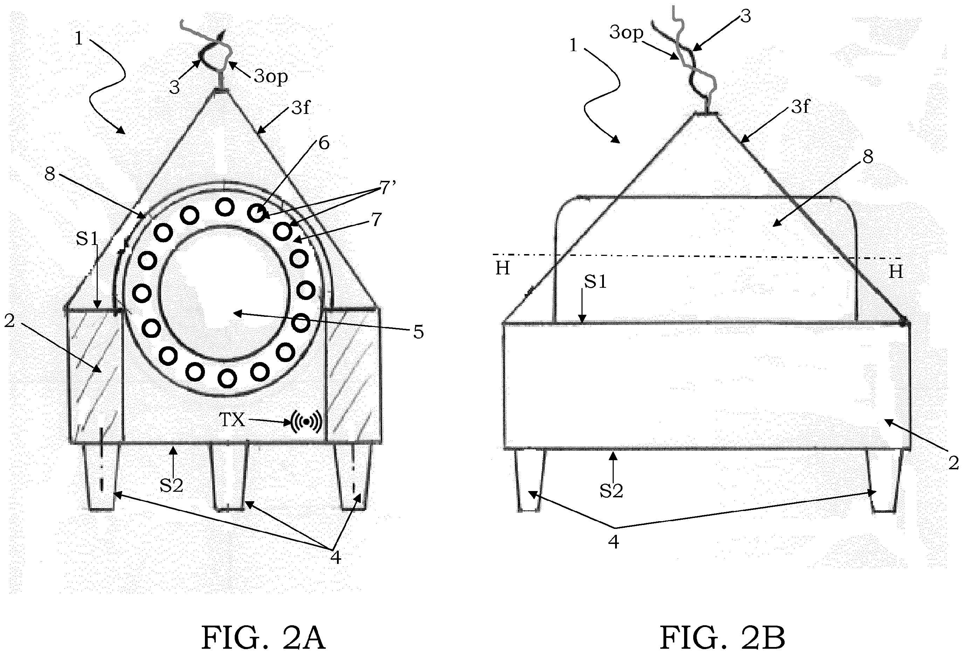

With reference now to figures 2A and 2B, which respectively show a front view and a lateral view of the anchoring system 1 according to the present invention, the anchoring system 1 comprises a body 2, suitably shaped, which has the main purpose of providing mass, i.e. anchoring weight, to the generator 10.

The body 2, which is shown in the figures as a unique block of material, is preferably made of reinforced concrete, although other materials are possible, such as ballasted steel.

The anchoring system 1 further comprises an anchoring cable 3, which is connected to the body 2 for example by means of an anchoring frame 3f, the anchoring cable 3 being firstly apt to connect the anchoring system 1 to the generator 10.

The anchoring cable 3 can be in the form of a rope made of a metal material (for example steel), in the form of a rope made of a synthetic material, or in the form of a chain made of a metal material (for example steel). Obviously, the shape and material of the anchoring cable 3 can vary depending on the stresses which the anchoring system 1 and the generator 10 are subjected to, as well as depending on economy and durability criteria.

According to a preferred embodiment of the present invention, the anchoring cable 3 comprises at least one first cable and at least one second cable, the first and second cables being independent of each other and being both connected at an end thereof to the anchoring system 1 and at the other end to the generator 10. The double-cable configuration, i.e. the presence of a first cable and of a second cable, is adopted for safety reasons, namely for preventing a possible accident from causing the breakage of the anchoring cable 3 and thus the uncontrolled surfacing of the generator 10. In particular, the first cable can be a stretched rope having a predetermined length, whereas the second cable can be a chain (or even a rope) having a length slightly greater than that of the first cable, so that, if the first cable is damaged or breaks, the second cable ensures anyway the anchoring to the seabed F of the generator 10. In any case, both cables included in the anchoring cable 3 are sized to withstand the maximum expected stress.

Obviously, the above embodiment is only provided for illustrative and not limiting purposes, as the anchoring cable 3 may include any number of cables, of any shape and material, apt to anchor the generator 10.

Suitably, the body 2, which, as previously observed, is preferably made of concrete, is shaped and sized to ensure a partial floating thereof. In particular, once placed in water, the body 2 is partially submerged by water, whereas a first face S1 thereof, opposite to a second face S2 facing the seabed F, surfaces from the water thus enabling the specialized personnel to easily access the anchoring system 1 for possible installation and/or maintenance operations. In other words, the body 2 is semi-floating, with the first face S1, which is an upper face according to the local reference system of the figures, surfacing from the water, and with the second face S2, which is a lower face according to the local reference system of the figures, immersed in water.

Still referring to figure 2A, advantageously according to the present invention, the anchoring system 1 comprises at least one first tank 5 apt to easily ensure the immersion and the following re-surfacing of the anchoring system 1, and therefore apt to ensure the positioning and recovery of the generator 10.

In particular, the first tank 5 is apt to be filled with water, in case the immersion of the anchoring system 1 is desired, or with air, in case the re-surfacing of the anchoring system 1 is desired, as it will be described more in detail in the following.

The first tank 5 is fixedly arranged on the body 2 and is partially embedded in it, the body 2 thus forming a protection structure for the first tank 5.

In particular, the body 2 is suitably shaped so as to house the first tank 5 in a suitable housing seat formed therein and so as to have, around the first tank 5 partially embedded in it, a walking plane on its first face S1 to allow the installation and/or maintenance operations by specialized operators.

In the embodiment shown in figure 2A, the first tank 5 has a cylindrical shape and is preferably made of a metal material (for example steel). Although the embodiment in which the first tank 5 has a cylindrical shape is considered the preferred one, it is clear that the first tank 5 can also have other shapes, the present invention not being limited to a particular shape for the first tank 5.

In general, the first tank 5 extends about a longitudinal axis H-H, which is parallel to a longitudinal axis of the body 2, as shown in figure 2B, even if other arrangements are of course possible. For example, it is possible to provide a configuration in which the first tank 5 is arranged with its longitudinal axis H-H orthogonal to the longitudinal axis of the body 2.

The first tank 5 is sized to sustain high pressures, the pressure varying as a function of the depth of the seabed F whereon the anchoring system 1 rests.

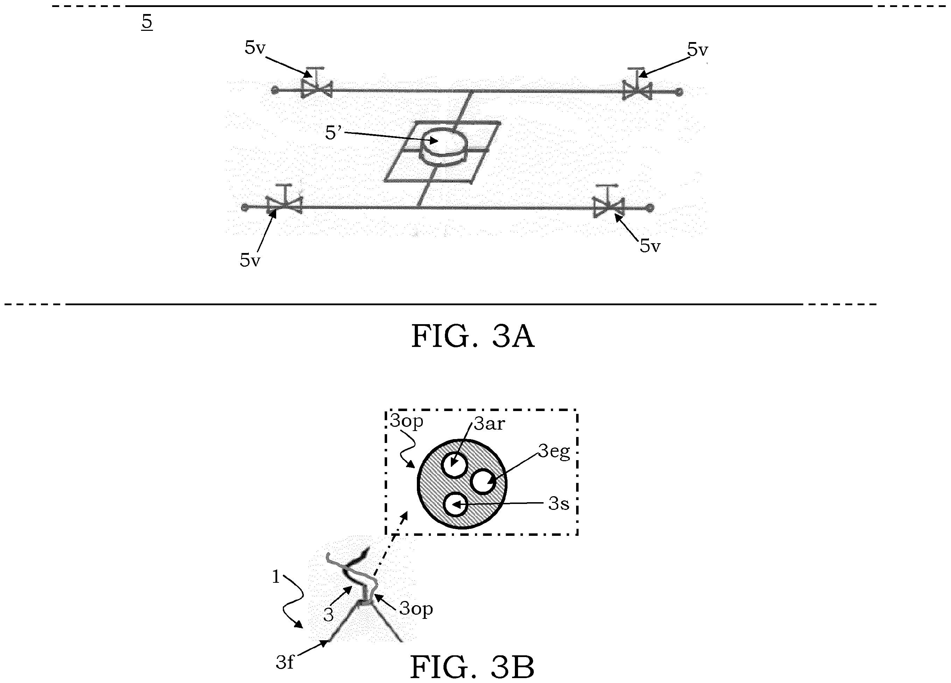

Specifically, as shown in figure 3A, the first tank 5 is provided with at least one first opening 5' apt to allow the feeding of water thereinto, as well as with at least one second opening (not shown in the figures) apt to allow the feeding of compressed air thereinto, with the consequent expulsion of any water possibly contained in the first tank 5.

The filling in with water of the first tank 5 through the first opening 5' is adjusted by at least one valve 5v connected to the first opening 5', the valve 5v being controlled by a ground station (also not shown). In particular, all of the valves adjusting the opening and closing of the openings in the present invention are valves provided with a compressed air actuator.

In the embodiment shown in figure 3A, four valves 5v are shown, those valves being connected to the first opening 5' of the first tank 5 and arranged symmetrically around it, even if it is obviously possible to provide any number of valves 5v depending on the needs and/or circumstances.

The first opening 5' of the first tank 5 can be for example a scoop thru-hull suitably arranged on the surface thereof, in particular on the portion of surface of the first tank 5 facing the seabed F, as it will be explained in the following.

In this way, when filled with water after the opening of the valve 5v of the first opening 5', the first tank 5 causes an increase in the overall weight of the anchoring system 1, which otherwise would be semi-floating due to the body 2 made of concrete, and therefore it causes its immersion, with the consequent immersion of the generator 10.

In particular, once filled in with water, the first tank 5 allows the anchoring system 1, and in particular its body 2, losing its floating ability and developing a force which is opposite and greater in module than the force (thrust) that causes its floating. When the first tank 5 is full of water, the anchoring system 1 lies on the seabed F exerting a retention force on the generator 10, to which it is connected by means of the anchoring cable 3 that maintains the same anchored to the seabed F. The length of the anchoring cable 3 determines the position of the generator 10 with respect to the seabed F.

Furthermore, referring now to figure 3B, the anchoring system 1 comprises an operating cable 3op, which is apt to transfer the electric power produced by the generator 10 to the anchoring system 1 and from the latter to the ground station. In other words, the operating cable 3op is connected to the generator 10, to the anchoring system 1 and to the ground station.

The operating cable 3op can be for example a flexible rubber pipe, which is supported by the anchoring cable 3, for example twisted around it, in the section between the generator 10 and the anchoring system 1.

In particular, as shown in figure 3B, the operating cable 3op comprises a compressed air feeding line 3ar adapted to feed compressed air from the ground station into the first tank 5 when it is desired to make the anchoring system 1 re-surface. In particular, the compressed air feeding line 3ar feeds compressed air into the first tank 5 through its second opening, thus causing the expulsion of the water previously stored, which is expelled from the first opening 5'. As a result, the first opening 5' also acts as a discharge opening, and the corresponding valve 5v, which is opened upon expulsion of the water, also acts as a discharge valve of the first tank 5.

The feeding of compressed air into the first tank 5 is adjusted by a suitable valve which is connected to the second opening and in turn connects said second opening to the compressed air feeding line 3ar of the operating cable 3op.

As it will be described in the following, the operating cable 3op also comprises means 3s (for example electric or fiber cables) adapted to send to the anchoring system 1 command and control signals managed by the ground station, as well as cables 3eg apt to transport the generated electric power.

Advantageously according to the present invention, the compressed air is therefore fed into the first tank 5 by means of a suitable compressed air feeding system. More particularly, the compressed air feeding system can be for example a compressor located in the ground station and connected to the first tank 5 by means of the compressed air feeding line 3ar, or the compressor can be included in the anchoring system 1 itself.

Due to the filling of compressed air, the water is expelled from the first tank 5 as previously described, and the overall weight of the anchoring system 1 is reduced, causing the surfacing of the anchoring system 1 and thus of the generator 10 connected thereto.

Suitably, according to a preferred embodiment of the present invention, the compressed air feeding system is at least one second tank 6, which contains high pressure compressed air such as to allow emptying the first tank 5 when it is filled in with water.

In particular, the second tank 6 is connected to the first tank 5 by means of suitable connecting means, which comprise for example suitable compressed air valves, so as to be able to feed compressed air directly into the first tank 5 through its second opening, in particular in case the operating cable 3op is not present or is not able to feed compressed air, for example due to an unexpected breakage of that operating cable 3op.

Obviously, it is possible to provide an embodiment in which the compressed air feeding system comprises both the compressed air feeding line 3ar of the operating cable 3op and the second tank 6, which can be used in different moments or even simultaneously. In particular, in this case, the first tank 5 preferably comprises only one second opening, said second opening being fed by two independent lines, namely by a first line connected to the compressed air feeding line 3ar and having its own valve, and by a second line fed by the second tank 6 and also having its own valve.

Still referring to figure 2A, in a preferred embodiment of the present invention, the first tank 5 has a cylindrical shape and the second tank 6 is in the form of a tube bundle, namely in the form of a plurality of tubes preferably arranged around the first tank 5. Advantageously, the second tank 6 is arranged around the first tank 5, preferably in a symmetrical configuration, and this configuration has many advantages, as it will be disclosed further on.

The tubes of the tube bundle of the second tank 6 generally have a diameter less than the diameter of the first tank 5, the term diameter meaning herein a maximum transverse dimension. For example, in the case of a first tank 5 having a cylindrical shape with a diameter of about 1000 mm, the tubes of the tube bundle of the second tank 6 preferably have a diameter less than 100 mm.

The thickness of the tubes of the tube bundle of the second tank 6 varies depending on the depth of the seabed F whereon the anchoring system 1 rests. In particular, by way of an example, the thickness of the tubes can vary between 89 mm and 101 mm, assuming a depth of the seabed F of about 20 m.

The tubes of the second tank 6 are preferably arranged around the first tank 5 with their longitudinal axes parallel to each other and parallel to the longitudinal axis H-H of the first tank 5, those tubes being preferably mutually radially equispaced, as it will be shown herein further.

In this preferred embodiment, each tube of the tube bundle of the second tank 6 is held in position around the first tank 5 by at least one ring 7 that surrounds the first tank 5 and is fastened to the outer surface thereof (for example welded). In particular, the rings 7 comprise a central opening whose shape is such to house the first tank 5 without clearance. Furthermore, the circular crown of the rings 7 comprises a plurality of holes 7' adapted to house the tubes of the tube bundle of the second tank 6, said holes 7' being therefore in a number equal to the number of the tubes of the tube bundle of the second tank 6. The tubes of the tube bundle of the second tank 6 are thus inserted into the respective hole 7' of the rings 7, which therefore ensure said tubes to be held in position. The holes 7' substantially have all the same diameter, and the center of each of those holes 7' is separated from the center of the adjacent holes by a same distance, so that the tubes of the second tank 6 are mutually radially equispaced as above indicated. In other words, the holes 7' are arranged on the circular crown of the rings 7 in an angular configuration that is radially symmetrical with respect to the longitudinal axis H-H, namely with respect to the center of the respective ring 7.

The tubes of the tube bundle of the second tank 6 are therefore associated with the first tank 5 by means of the rings 7, which can be made of a metal material such as steel.

Preferably, the tubes of the tube bundle of the second tank 6 are connected to each other so as to facilitate the connection of those tubes as a whole to the first tank 5.

The tubes of the tube bundle of the second tank 6 are also preferably made of steel.

Obviously, the above embodiment in which the second tank 6 is in the form of a tube bundle is provided just by way of example and not for limiting the scope of the present invention, since the second tank 6 may have also other shapes. By way of example, in an alternative embodiment not shown in the figures, the second tank 6 can have the shape of a hollow cylinder into which the first tank 5, also having a cylindrical shape, is coaxially inserted, those cylinders being connected to each other by suitable connecting means, which for example comprise valves.

However, it should be stressed that the embodiment in which the second tank 6 is in the form of a tube bundle is considered the preferred one, since, in order to effectively expel the water from the first tank 5 for the re-surfacing of the anchoring system 1, the required pressure of the compressed air contained in the second tank 6 is greater than the pressure exerted by the water at the depth of the seabed F whereon the anchoring system 1 lies. As a result, since the required pressure of the compressed air is relatively high (for example it can also be of 4-5 bar), the use of a plurality of tubes having a reduced volume facilitates the manufacturing and sizing the second tank 6, since, the amount of compressed air being equal, said tubes are more easily adapted to be filled with high pressure compressed air with respect to a second tank 6 made as a single component having a volume significantly greater than that of the single tubes. In other words, it is easier to fill a plurality of tubes having a reduced diameter with high pressure compressed air than a unique tank having a greater volume, because of the reduced volumes.

In any case, it is preferable to arrange the second tank 6 symmetrically around the first tank 5, as shown in figure 2A, since a symmetrical distribution of the loads of the anchoring system 1 ensures a symmetrical immersion thereof, namely an immersion in which the longitudinal axis of the body 2 remains substantially parallel to the surface of the fluid in which it is immersed, so as to ensure the correct dragging in depth and the correct anchoring of the generator 10, which, once anchored to the seabed F, automatically finds its operating position, as it will be described in detail further on.

Furthermore, still to ensure a symmetrical immersion of the anchoring system 1, the first opening 5' of the first tank 5 is formed on a portion of surface thereof facing the seabed F, namely on a portion of the lower surface of the first tank 5 according to the local reference system of the figures. In other words, the first opening 5' is arranged on the bottom of the first tank 5 and in a central portion thereof. Obviously, also the body 2 has a corresponding opening to allow the passage of water inside the first tank 5 through its first opening 5'.

Still referring to figures 2A and 2B, the anchoring system 1 comprises a plurality of supporting structures or legs 4 apt to ensure the support of the anchoring system 1 on a surface (for example the seabed F). The supporting structures 4 protrude from the face S2 of the body 2 and, in the embodiment shown in the figures, they have a fixed length and are integral to the body 2.

The supporting structures 4 can be made of the same material of the body 2 (for example concrete), or they can be made of a different material, such as a metal material (for example steel).

Although figure 2A shows an embodiment in which the anchoring system 1 comprises three supporting structures 4, the number of supporting structures 4 may vary depending on the needs and/or circumstances, the figures being provided just by way of example and not for limiting the scope of the present invention.

In an alternative embodiment of the present invention not shown in the figures, the body 2 has a plurality of holes adapted to house the supporting structures 4, which have all the same fixed length and are held in those holes by means of a spring-release system comprised in each hole. In particular, inside the holes the presence of springs connected both to the body 2 and to the supporting structures 4 is provided, those springs being adapted to support the supporting structures 4 and to hold them inside the holes. In this way, upon the abutment of the supporting structures 4 on the seabed F, the length by which each supporting structure 4 protrudes from the body 2 is automatically adjusted by means of the spring-release system, in particular by a different compression of the various springs, the spring-release system therefore acting as a balancing system for the anchoring system 1.

In this way, the supporting structures 4 automatically adapt to the seabed F, thanks to compressions that are differentiated for the respective springs, so that the body 2 is arranged with its longitudinal axis substantially parallel to the surface of the water, also in case of an irregular seabed F.

In another embodiment of the invention (also not shown), the supporting structures 4 are telescopic in order to ensure the above adjustment to the seabed F. In this embodiment, it is possible to cause the movement of the telescopic supporting structures 4 by using the compressed air coming from the compressed air feeding line 3ar of the operating cable 3op or coming from the second tank 6. In particular, the length of the supporting structures 4 can be adjusted by the pressure of the compressed air that is fed by means of a suitable connecting duct associated with the supporting structures 4, each of which is differently and independently adjusted so as to adjust the anchoring system 1 to any type of seabed F.

Alternatively, it is possible to provide a hydraulic system associated with the supporting structures 4 for adjusting the length thereof.

Furthermore, the anchoring system 1 comprises a covering structure or casing 8 connected to the body 2 and apt to cover the first tank 5 and the second tank 6 acting as a protection structure for those components.

The casing 8 is preferably made of a metal material (such as steel), or of any other material adapted to protect the first tank 5 and the second tank 6, at the same time ensuring the semi-floatability of the overall anchoring system 1 when the first tank 5 is not filled with water.

Finally, the anchoring system 1 comprises suitable wireless reception/transmission means TX (for example a radio frequency transceiver) adapted to receive/send wireless signals (for example radio frequency signal) from/to the ground station. This is particularly useful in case of breakage of the operating cable 3op, since in this case it is possible to send suitable wireless signals to the reception/transmission means TX to command the release of the compressed air contained in the second tank 6 towards the first tank 5, in order to cause the re-surfacing of the anchoring system 1.

In particular, the reception/transmission means TX are apt to command the feeding of compressed air into the first tank 5 from the second tank 6 by receiving a signal through which the valves 5v of the first opening 5' and the valves of the second opening are driven, which valves, as previously observed, comprise suitable compressed air actuators and adjust the passage of water and of compressed air in the first tank 5. Furthermore, the reception/transmission means TX are adapted to monitor, command and control operating parameters of the anchoring system 1 by sending signals for its monitoring and receiving signals for its command and control.

As previously observed, the anchoring system 1 is adapted to anchor a submarine electric power generator 10 to a seabed F (or riverbed). In particular, the assembly comprising the anchoring system 1 and the generator 10 connected thereto forms a submarine electric power production plant.

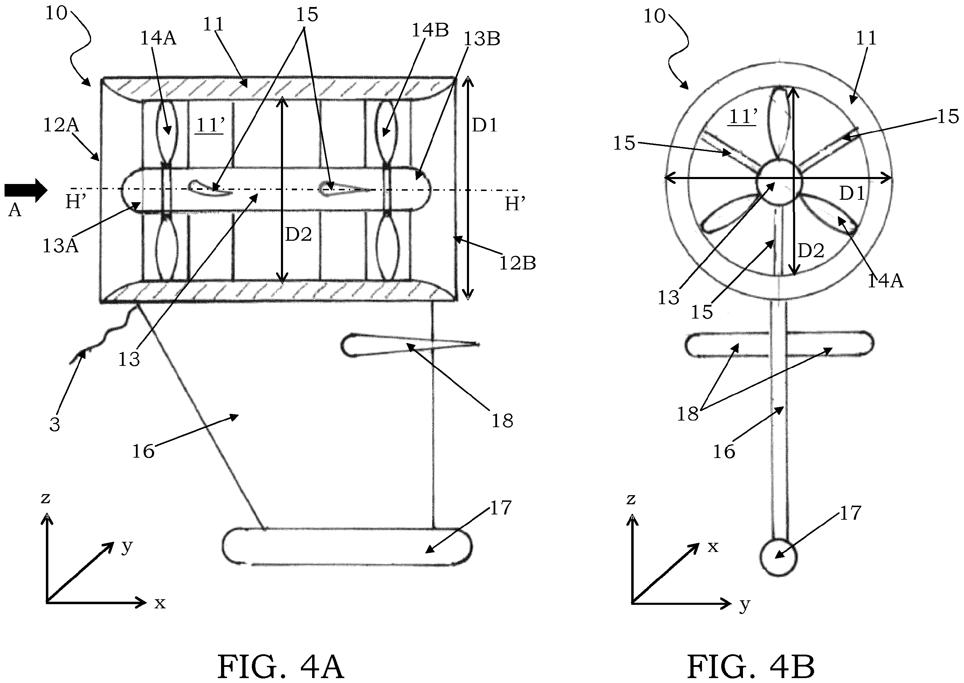

In particular, referring now to figures 4A and 4B, the generator 10 comprises a main body 11 which extends along a longitudinal axis H'-H', the main body 11 defining a cavity 11' therein and being provided with at least two openings 12A and 12B that are opposite along the longitudinal axis H'-H' and that allow the passage of fluid inside the cavity 11' of the main body 11. The main body 11 is adapted to contain a plurality of components of the generator 10 that will be described in the following. In the present description, the longitudinal axis H'-H' of the main body 11 can also be the longitudinal axis of the generator 10 itself.

In a preferred embodiment of the present invention, shown in figure 4B, the main body 11 is in the form of a tube or a hollow cylinder.

Furthermore, the main body 11 has a first transverse dimension or outer diameter D1 and a second transverse dimension or inner diameter D2, the term "transverse dimension" or "diameter" meaning a maximum dimension measured in a direction orthogonal to the longitudinal axis H'-H'.

In particular, the first transverse dimension D1 is constant along the longitudinal axis H'-H', whereas the second transverse dimension D2 is variable along the longitudinal axis H'-H'. In other words, the main body 11 has a non-constant transverse section along its own longitudinal axis H'-H'. In particular, at one of the openings 12A or 12B, the second transverse dimension D2 has a dimension almost equal to the first transverse dimension D1, from which it differs just by a thickness of the main body 11, said second transverse dimension D2 decreasing as one moves along the longitudinal axis H'-H' from the opening 12A or 12B towards the other opening 12B or 12A. The main body 11 comprises at least one section in which the second transverse dimension D2 is substantially constant along the longitudinal axis H'-H', said second transverse dimension D2 then increasing (at the end of said section) until it has again a dimension almost equal to the transverse dimension D1, from which it differs just by a thickness of the main body 11, at the other opposite opening 12B or 12A.

In this way, advantageously according to the present invention, thanks to the variable transverse section of the main body 11, a progressive and designed reduction of the flow section of the fluid entering the main body 11 from one of the two openings 12A or 12B (the opening 12A in figure 4A) is obtained and, due to this reduction, the fluid increases its own speed inside the main body 11.

By way of example, the first transverse dimension D1 can be of some meters (preferably 3400 mm), the thickness of the main body 11 (hollow cylinder) at the openings can be of about ten centimeters (preferably 150 mm), whereas the minimum second transverse dimension D2 can be of about 3100 mm.

The main body 11 is preferably made of a metal material, even if it can be made of other materials, such as fiberglass or carbon fiber.

The main body 11, which is immersed in a fluid with its longitudinal axis H'-H' substantially parallel to the flow of said fluid, has a dual function: on the one hand, it is the supporting structure of the generator 10, on the other hand it ensures the floatability of the generator 10 itself by generating a thrust able to overcome its own weight force. In particular, the high volumes available inside the main body 11 ensure the floatability of the main body 11 itself and of all the components comprised therein.

The main body 11 comprises a containment body 13, which extends between two end portions 13A and 13B along a longitudinal axis coinciding with the longitudinal axis H'-H' of the main body 11 (i.e. the containment body 13 is arranged coaxially in the main body 11).

The containment body 13 in turn includes a pair of independent alternators (not shown), whose rotation shafts rotate about a same axis, which, in a preferred embodiment of the present invention, coincides with the longitudinal axis H'-H'.

The containment body 13 preferably has a cylindrical shape, even if it can also have other shapes, and is sealed so as to prevent the fluid from entering it.

In a preferred embodiment of the present invention, the end portions 13A and 13B of the containment body 13 are ogival-shaped, so as not to obstruct the flow of the fluid that passes through the main body 11 and that therefore strikes the containment body 13.

As shown in figures 4A and 4B, the generator 10 suitably comprises a pair of propellers arranged on the containment body 13, in particular a first propeller 14A and a second propeller 14B arranged at the end portions 13A and 13B of the containment body 13, respectively. It should be stressed that also other arrangements of the propellers inside the main body 11 (and therefore not only at the end portions of the containment body 13) are possible.

The propellers 14A and 14B have the same rotation axis (i.e. they are coaxial), which, in a preferred embodiment of the present invention, coincides with the longitudinal axis H'-H' of the main body 11. In other words, both propellers 14A and 14B rotate around the containment body 13 that is coaxial with the main body 11.

Suitably, the propellers 14A and 14B are contra-rotating so as to cancel the moments generated by their rotation and to balance in this way the distribution of the forces inside the generator 10.

Each propeller 14A and 14B is connected to a respective alternator included in the containment body 13. In particular, the movement (rotation) of a propeller (caused by the flow of the fluid in which the generator 10 is immersed) sets in motion the rotation shaft of the alternator connected to the propeller in order to generate electric power. More particularly, the propellers 14A and 14B are directly fitted (spliced) on the rotation shafts of the alternators.

As previously observed, the propellers 14A and 14B are arranged to rotate about the containment body 13 inside the main body 11, in particular are arranged in a position along the longitudinal axis H'-H' of the main body 11 at which the second transverse dimension D2 is minimum. Specifically, both propellers 14A and 14B are arranged respectively at opposite ends of the section of the main body 11 where the second transverse dimension D2 remains substantially constant. This arrangement allows improving the efficiency of the generator 10.

The containment body 13 is kept in the desired position inside the main body 11 by a plurality of wings 15 arranged between the first propeller 14A and the second propeller 14B. The wings 15 are adapted to connect the containment body 13 to the main body 11 and are suitably shaped so that the fluid flow, after having set in motion one of the first propeller 14A or the second propeller 14B, can recover its own trajectory, which is linear and parallel to the longitudinal axis H'-H', before encountering the other propeller, and therefore allowing this other propeller to work with a better performance. In other words, the presence of the wings 15 and their designed geometric shape allows the flow to recover the parallelism with the rotation axis of the propellers once it has set in motion one propeller, thus improving the performance of those propellers.

The fluid flow enters the main body 11 according to the direction indicated by the arrow A in figure 4A at the opening 12A. The fluid flow is therefore initially accelerated by the reduction in section of the main body 11 (first tapered section) and, after having passed through and set in motion both propellers 14A and 14B, is then slowed down by the progressive increase of the second transverse dimension D2 of the main body 11 (second tapered section), so as to facilitate the insertion of the fluid into the sea current in which the generator 10 is immersed, thus improving the overall performance of the generator 10.

The generator 10 further comprises a first fin 16 that extends from the outer surface of the main body 11. At an end of the first fin 16 a ballast 17 is fixed. In particular, the ballast 17 is fixed at the end of the first fin 16 which is further from the main body 11 (distal end).

The function of the first fin 16 is dual: on the one hand, it allows the generator 10, once immersed in the fluid, to be arranged with the longitudinal axis H'-H' parallel to the direction of the current flow, this direction being indicated by the arrow A in figure 4A, on the other hand it supports the ballast 17, whose distance from the longitudinal axis H'-H' ensures a balancing moment for maintaining the vertical alignment of the generator 10.

In particular, referring to the Cartesian reference system of figures 4A and 4B, the first fin 16 ensures the generator 10 to be arranged with the longitudinal axis H'-H' parallel to the x-axis, whereas the ballast 17 ensures the stability of the generator 10 along the z-axis.

In other words, the generator 10 can be compared to a sail boat, in which the main body 11 is the hull and in which the first fin 16, along with the ballast 17, is the ballasted drift.

In this way, the presence of the first fin 16 ensures that the generator 10 always maintains an orientation parallel to the flow, any deviation thereof associated with a rotation about a vertical axis (z-axis) orthogonal to the longitudinal axis H'-H' causing the increase of the surface of the first fin 16 exposed to the incident flow, with the consequent occurrence of a straightening thrust that brings the generator 10 back to the correct position, i.e. the position in which the longitudinal axis H'-H' is parallel to the flow and in which the electric power generation is more efficient. The presence of the ballast 17 instead ensures the occurrence of a stabilizing moment in case the generator 10 is subjected to a rotation about its longitudinal axis H'-H'.

As a result, advantageously according to the present invention, the generator 10 is stabilized both along the x-axis (i.e. the longitudinal axis H'-H'), and along the z-axis.

Furthermore, the generator 10 comprises a plurality of second fins 18, which, in the embodiment shown in figures 4A and 4B, are connected to the first fin 16. In particular, in a preferred embodiment of the present invention, the generator 10 comprises a pair of second fins 18, respectively arranged on opposite faces of the first fin 16. Each second fin 18 extends from the first fin 16 along a longitudinal axis lying on a plane that is substantially orthogonal to the plane in which the first fin 16 lies.

The presence of the second fins 18 ensures the stabilization of the generator 10 along a transverse axis, namely along a horizontal axis orthogonal to the longitudinal axis H'-H' and parallel to the y-axis of the reference system of figures 4A and 4B.

Obviously, it is possible to provide more than one pair of second fins 18, those second fins 18 being however always arranged on opposite faces of the first fin 16 so as to stabilize the generator 10 in a symmetric manner. In an alternative embodiment of the present invention (not shown in the figures), the second fins 18 can also be arranged on the main body 11 and not on the first fin 16.

The geometry and arrangement of the first fin 16 and of the second fins 18 is designed to reduce the hydrodynamic resistance to the flow that strikes them, thus reducing the stresses on the anchoring cable 3.

Finally, the generator 10 comprises motor means (not shown), for example compressed air means, suitably located so as to adjust the position of the generator 10 if the direction of the current is not constant. In this case, by acting on these motor means, possible twisting of the operating cable 3op is avoided.

As previously stated, the anchoring cable 3 is also adapted to support the operating cable 3op, which transports the electric power generated by the generator 10 up to the ground station, which in turn comprises components adapted to command, control, monitor and maintenance of the anchoring system 1 and of the generator 10.

In particular, the ground station comprises a compressor for generating the compressed air to be fed into the first tank 5 by means of the compressed air feeding line 3ar and for commanding and controlling the valves of the first tank 5.

The ground station further comprises a monitoring and control unit of the anchoring system 1, adapted to detect parameters such as its depth, inclination, tension on the anchoring cable 3, pressure in the first tank 5, pressure in the second tank 6 and the like. In particular, the monitoring and control unit processes signals coming from sensors arranged in suitable points of the anchoring system 1, as well as coming from the reception/transmission means TX.

The ground station also comprises a monitoring and control unit of the generator 10, adapted to detect parameters such as depth, inclination, presence of fluid infiltration in the containment body 13, operating regimes, information coming from gyroscopes, and the like.

Suitably, a small part of the compressed air transported by the operating cable 3op can also be directed into the containment body 13 so that it is in slight overpressure, in order to avoid undesired fluid inlet thereinto.

Finally, position and signaling transponders are provided both on the generator 10 and on the anchoring system 1.

In conclusion, the present invention provides an anchoring system for a submarine electric power generator, the anchoring system comprising a semi-floating body and a first tank housed therein, whose filling with water causes the loss of floatability of the anchoring system (and its immersion) and whose filling with compressed air (with the consequent expulsion of water) allows its surfacing, the feeding of compressed air into the first tank possibly occurring by means of compressed air contained in a second tank connected to the first tank.

Advantageously according to the present invention, the positioning at the desired depth of a submarine electric power generator connected to the above-described anchoring system is greatly simplified by the fact that the latter, like the generator itself, is semi-floating when the first tank is not filled in with water. As a result, once the position in which the generator is to be installed has been identified, the submarine electric power production plant that comprises the generator and the anchoring system is transported in that position by means of boat or simply towering it.

Afterwards, by feeding water into the first tank, the anchoring system is immersed in a controlled manner and drags in depth the generator connected thereto. Therefore, the generator is positioned at the desired depth (for example at the center of a sea or river current) depending on the selected length of the anchoring cable that connects the generator to the anchoring system.

When the anchoring system lies on the seabed, the generator connected thereto automatically takes up its operating position, inclining the anchoring cable according to the current intensity and orienting itself in parallel to the fluid flow thanks to a suitable system of fins and ballasts (in case of null current the generator will maintain the anchoring cable substantially vertical).

The power produced by the generator is then transferred to a ground station by means of a system of cables comprised in an operating cable connected to the generator.

Suitably, the operating cable is also connected to the anchoring system (in particular it is supported by the anchoring cable, for example twisted around it) and, if one desires to make the system re-surface, it allows feeding compressed air into the first tank by means of a compressed air line in the operating cable (simultaneously to the opening of the discharge valves), thus causing the first tank to be emptied from the water present therein and therefore causing the gradual recovery of the floatability, with the consequent re-surfacing both of the anchoring system and of the generator.

It is thus clear that the positioning of the anchoring system and of the generator connected thereto is very simple and, advantageously according to the present invention, also their recovery is very simple, said recovery only requiring feeding compressed air into the first tank, resulting in considerable time savings, as well as in considerable economic savings.

Still more advantageously, in case it would not be possible to feed compressed air through the operating cable, it is possible to provide the needed compressed air through the second tank connected to the first tank. In this case, no operating cable is necessary, a command sent to reception/transmission means arranged on the anchoring system allowing the control of the valves responsible for feeding compressed air from the second tank. This is very advantageous in case of breakage of the operating cable or in case it is impossible to feed compressed air through the operating cable.

Suitably, the arrangement of the second tank around the first tank allows a better balancing of the forces inside the anchoring system, allowing a safer immersion of the system.

Finally, it should be stressed that the use of a tube bundle for the second tank greatly simplifies its sizing (for example commercial tubes with reduced diameter can be used), said second tank generally containing high pressure compressed air.

Obviously, a person skilled in the art, in order to meet particular needs and specifications, can carry out several changes and modifications to the anchoring system and to the generator of the submarine electric power production plant described above, all included in the protection scope of the invention as defined by the following claims.

## Claims

1. An anchoring system (1) for a submarine electric power generator, said anchoring system (1) comprising a semi-floating body (2) and an anchoring cable (3) which is associated with said body (2) and is apt to connect said anchoring system (1) to the generator, said anchoring system (1) comprising at least one first tank (5), which extends along a longitudinal axis (H-H) and is housed in said body (2), said at least one first tank (5) being provided with at least one first opening (5') apt to enable the feeding of water into said at least one first tank (5) and with at least one second opening apt to enable the feeding of compressed air into said at least one first tank (5) by means of a compressed air feeding system, said anchoring system (1) being **characterized in that** said compressed air feeding system comprises at least one second tank (6) containing compressed air, said at least one second tank (6) being connected to said at least one first tank (5) and being apt to feed compressed air directly into said at least one first tank (5), wherein said at least one second tank (6) is arranged around said first tank (5).

2. The anchoring system (1) according to claim 1, **characterized in that** said compressed air feeding system also comprises a compressed air feeding line (3ar) apt to feed compressed air into said at least one first tank (5).

3. The anchoring system (1) according to claim 1 or 2, **characterized in that** said at least one first tank (5) has a cylindrical shape and said at least one second tank (6) is in the form of a tube bundle comprising a plurality of tubes arranged around said at least one first tank (5), said tubes of said tube bundle of said at least one second tank (6) having their longitudinal axes parallel to each other and parallel to said longitudinal axis (H-H) of said at least one first tank (5).

4. The anchoring system (1) according to claim 3, **characterized in that** each of said tubes of said tube bundle of said at least one second tank (6) is held in position by at least one ring (7), which surrounds said at least one first tank (5) and is fastened to the outer surface thereof, the circular crown of said at least one ring (7) comprising a plurality of holes (7') apt to house said tubes of said at least one second tank (6), said holes (7') being arranged in an angular configuration that is radially symmetrical with respect to said longitudinal axis (H-H), so that said tubes of said at least one second tank (6) are radially equispaced.

5. The anchoring system (1) according to any one of the preceding claims, **characterized in that** it comprises a plurality of supporting structures (4) apt to ensure the support of said anchoring system (1) to a seabed (F), said supporting structures (4) protruding from a face (S2) of said body (2), said face (S2) facing said seabed (F).

6. The anchoring system (1) according to claim 5, **characterized in that** said supporting structures (4) are integral to said body (2), or **in that** said supporting structures (4) are housed in holes formed in said body (2), in which holes they are held by means of a spring-release system, or **in that** said supporting structures (4) are telescopic.

7. The anchoring system (1) according to any one of the preceding claims, **characterized in that** said anchoring cable (3) comprises at least one first cable and at least one second cable independent of each other, one of said first cable and said second cable having a length greater than the length of the other one of said first cable and said second cable.

8. The anchoring system (1) according to any one of the preceding claims, **characterized in that** it comprises an operating cable (3op) connecting said anchoring system (1) to the generator and to a ground station, said operating cable (3op) comprising means (3s) apt to send control signals to said anchoring system (1), as well as cables (3eg) apt to transport the generated electrical power.

9. The anchoring system (1) according to claims 2 and 8, **characterized in that** said operating cable (3op) comprises said compressed air feeding line (3ar).

10. The anchoring system (1) according to any one of the preceding claims, **characterized in that** it further comprises wireless reception/transmission means (TX) apt to receive and send wireless signals, said reception/transmission means (TX) being apt to command the feeding of compressed air into said at least one first tank (5) by receiving a driving signal of suitable valves, said valves having a compressed air actuator, and/or being adapted to monitor, to command and to control operating parameters of said anchoring system (1).

11. A submarine plant for the production of electric power comprising at least one submarine electric power generator (10) and at least one anchoring system (1) according to any one of the preceding claims, said generator (10) being anchored to a seabed (F) by means of said anchoring system (1).

12. The submarine plant for the production of electric power according to claim 11, **characterized in that** said generator (10) comprises at least:
- a main body (11), which extends along a longitudinal axis (H'-H') defining a cavity (11') therein and is provided with two openings (12A, 12B) that are opposite along said longitudinal axis (H'-H'), said openings (12A, 12B) allowing the passage of a fluid flow within said cavity (11');
- a containment body (13) included in said main body (11), said containment body (13) extending along said longitudinal axis (H'-H') between a first end portion (13A) and a second end portion (13B), said containment body (13) in turn including at least one alternator; and
- at least one propeller (14A, 14B) that is arranged to rotate about said containment body (13) and causes the rotation of the rotation axis of said at least one alternator.

13. The submarine plant for the production of electric power according to claim 12, **characterized in that** said generator (10) comprises a pair of alternators, a first propeller (14A) and a second propeller (14B), which are arranged to rotate about said containment body (13) with their rotation axis coinciding with said longitudinal axis (H'-H'), said first propeller (14A) and said second propeller (14B) being contra-rotating.

14. The submarine plant for the production of electric power according to claim 13, **characterized in that** said generator (10) further comprises a plurality of wings (15) arranged between said first propeller (14A) and said second propeller (14B), said wings (15) being shaped and suitably arranged so as to allow said fluid flow to recover the parallelism with the rotation axis of said propellers (14A, 14B) while flowing between said propellers (14A, 14B).

15. The submarine plant for the production of electric power according to claim 11, **characterized in that** said generator (10) further comprises a first fin (16) extending from said main body (11), a ballast (17) fixed at one end portion of said first fin (16), as well as a plurality of second fins (18) connected to said first fin (16) or to said main body (11), said first fin (16), said ballast (17) and said second fins (18) being apt to spatially stabilize said generator (10).

## Patentansprüche

1. Ein Verankerungssystem (1) für einen Unterwasser-Generator für elektrische Energie, wobei das Verankerungssystem (1) einen halb-schwebenden Körper (2) und ein Verankerungskabel (3) aufweist, das mit dem Körper (2) gekoppelt ist und ausgelegt ist, das Verankerungssystem (1) mit dem Generator zu verbinden, wobei das Verankerungssystem (1) mindestens einen ersten Behälter (5) aufweist, der sich entlang einer Längsachse (H-H) erstreckt und in dem Körper (2) untergebracht ist, wobei der mindestens eine erste Behälter (5) mit mindestens einer ersten Öffnung (5'), die ausgelegt ist, das Zuführen von Wasser in den mindestens einen ersten Behälter (5) zu ermöglichen, und mit mindestens einer zweiten Öffnung versehen ist, die ausgelegt ist, das Zuführen von komprimierter Luft in den mindestens einen ersten Behälter (5) mittels eines Zuführsystems für komprimierte Luft zu ermöglichen, wobei das Verankerungssystem (1) **dadurch gekennzeichnet ist, dass** das Zuführsystem für komprimierte Luft mindestens einen zweiten Behälter (6) aufweist, der komprimierte Luft enthält, wobei der mindestens eine zweite Behälter (6) mit dem mindestens einen ersten Behälter (5) verbunden und ausgelegt ist, komprimierte Luft dem mindestens einen ersten Behälter (5) direkt zuzuführen, wobei der mindestens eine zweite Behälter (6) um den ersten Behälter (5) herum angeordnet ist.

2. Das Verankerungssystem (1) nach Anspruch 1, **dadurch gekennzeichnet, dass** das Zuführsystem für komprimierte Luft auch eine Zuführleitung (3ar) für komprimierte Luft aufweist, die ausgelegt ist, komprimierte Luft dem mindestens einen ersten Behälter (5) zuzuführen.

3. Das Verankerungssystem (1) nach Anspruch 1 oder Anspruch 2, **dadurch gekennzeichnet, dass** der mindestens eine erste Behälter (5) eine zylindrische Form hat und dass der mindestens eine zweite Behälter (6) in der Form eines Rohrbündels ist, das eine Vielzahl von Rohren aufweist, die um den mindestens einen ersten Behälter (5) herum angeordnet sind, wobei die Rohre des Rohrbündels des mindestens einen zweiten Behälters (6) Längsachsen haben, die parallel zueinander und parallel zu der Längsachse (H-H) des mindestens einen ersten Behälters (5) sind.

4. Das Verankerungssystem (1) nach Anspruch 3, **dadurch gekennzeichnet, dass** jedes der Rohre des Rohrbündels des mindestens einen zweiten Behälters (6) in Position durch mindestens einen Ring (7) gehalten ist, der den mindestens einen ersten Behälter (5) umgibt und an dessen Außenfläche befestigt ist, wobei der kreisförmige Kranz des mindestens einen Rings (7) eine Vielzahl von Löchern (7') aufweist, die ausgelegt sind, die Rohre des mindestens einen zweiten Behälters (6) unterzubringen, wobei die Löcher (7') in einer Winkelanordnung angeordnet sind, die radial symmetrisch zur Längsachse (H-H) derart ist, dass die Rohre des mindesten einen zweiten Behälters (6) radial gleich beabstandet sind.

5. Das Verankerungssystem (1) nach einem der vorhergehenden Ansprüche, **dadurch gekennzeichnet, dass** es eine Vielzahl von Stützstrukturen (4) hat, die ausgelegt sind, das Abstützen des Verankerungssystems (1) auf einem Grund (F) sicherzustellen, wobei die Stützstrukturen (4) von einer Fläche (S2) des Körpers (2) abstehen und wobei die Fläche (S2) dem Grund (F) zugewandt ist.

6. Das Verankerungssystem (1) nach Anspruch 5, **dadurch gekennzeichnet, dass** die Stützstrukturen (4) einstückig mit dem Körper (2) sind oder dass die Stützstrukturen (4) in Löchern untergebracht sind, die in dem Körper (2) ausgebildet sind, wobei sie in diesen Löchern mittels eines Feder-Freigabe-Systems gehalten sind, oder dass die Stützstrukturen (4) teleskopisch sind.

7. Das Verankerungssystem (1) nach einem der vorhergehenden Ansprüche, **dadurch gekennzeichnet, dass** das Verankerungskabel (3) mindestens ein erstes Kabel und ein zweites Kabel aufweist, die unabhängig voneinander sind, wobei entweder das erste Kabel oder das zweite Kabel eine Länge hat, die größer als die Länge des jeweils anderen von dem ersten Kabel und dem zweiten Kabel ist.

8. Das Verankerungssystem (1) nach einem der vorhergehenden Ansprüche, **dadurch gekennzeichnet, dass** es ein Betriebskabel (3op) aufweist, das das Verankerungssystem (1) mit dem Generator und einer Bodenstation verbindet, wobei das Betriebskabel (3op) eine Einrichtung (3s), die ausgelegt ist, Steuersignale zu dem Verankerungssystem (1) zu senden, und auch Kabel (3eg) aufweist, die ausgelegt sind, die erzeugte, elektrische Energie zu transportieren.

9. Das Verankerungssystem (1) nach den Ansprüchen 2 und 8, **dadurch gekennzeichnet, dass** das Betriebskabel (3op) die Zuführleitung (3ar) für komprimierte Luft aufweist.

10. Das Verankerungssystem (1) nach einem der vorhergehenden Ansprüche, **dadurch gekennzeichnet, dass** es weiterhin eine Einrichtung für drahtlosen Empfang/ drahtloses Senden (TX) aufweist, die ausgelegt ist, Drahtlossignale zu empfangen und zu senden, wobei die Empfangs/Sendeeinrichtung (TX) ausgelegt ist, das Zuführen von komprimierter Luft zu dem mindestens einen ersten Behälter (5) durch Empfangen eines Stellsignals geeigneter Ventile zu befehlen, die ein Stellglied für komprimierte Luft haben, und/oder ausgelegt ist, Betriebsparameter des Verankerungssystems (1) zu überwachen, zu befehlen und zu steuern.

11. Ein Unterwasser-Kraftwerk zum Erzeugen elektrischer Energie, das mindestens einen Unterwasser-Generator (10) für elektrische Energie und mindestens ein Verankerungssystem (1) gemäß einem der vorhergehenden Ansprüche aufweist, wobei der Generator (10) mit einem Grund (F) mittels des Verankerungssystems (1) verankert ist.

12. Das Unterwasser-Kraftwerk zum Erzeugen elektrischer Energie nach Anspruch 11, **dadurch gekennzeichnet, dass** der Generator (10) mindestens aufweist:
- einen Hauptkörper (11), der sich entlang einer Längsachse (H'-H') erstreckt und einen Hohlraum (11') begrenzt und mit zwei Öffnungen (12A, 12B) versehen ist, die gegenüberliegend entlang der Längsachse (H'-H') vorgesehen sind, wobei die Öffnungen (12A, 12B) den Durchgang eines Fluidflusses innerhalb des Hohlraumes (11') ermöglichen;
- einen Kapselungskörper (13), der in dem Hauptkörper (11) enthalten ist, wobei sich der Kapselungskörper (13) entlang der Längsachse (H'-H') zwischen einem ersten Endabschnitt (13A) und einem zweiten Endabschnitt (13B) erstreckt und wobei der Kapselungskörper (13) mindestens einen Wechselstromgenerator enthält; und
- mindestens ein Flügelrad (14A, 14B), das angeordnet ist, sich um den Kapselungskörper (13) zu drehen, und das die Drehung der Drehachse des mindestens einen Wechselstromgenerators verursacht.

13. Unterwasser-Kraftwerk zum Erzeugen elektrischer Energie nach Anspruch 12, **dadurch gekennzeichnet, dass** der Generator (10) ein Paar von Wechselstromgeneratoren, ein erstes Flügelrad (14A) und ein zweites Flügelrad (14B) aufweist, die angeordnet sind, sich um den Kapselungskörper (13) zu drehen, wobei ihre Drehachse mit der Längsachse (H'-H') zusammenfallen und wobei das erste Flügelrad (14A) und das zweite Flügelrad (14B) entgegengesetzt rotieren.

14. Das Unterwasser-Kraftwerk zum Erzeugen von elektrischer Energie nach Anspruch 13, **dadurch gekennzeichnet, dass** der Generator (10) eine Vielzahl von Flügeln (15) aufweist, die zwischen dem ersten Flügelrad (14A) und dem zweiten Flügelrad (14B) angeordnet sind, wobei die Flügel (15) eine Form haben und geeignet derart angeordnet sind, dass der Fluidfluss parallel zu der Drehachse der Flügelräder (14A, 14B) ausgerichtet werden kann, während er zwischen den Flügelrädern (14A, 14B) fließt.

15. Das Unterwasser-Kraftwerk zum Erzeugen von elektrischer Energie nach Anspruch 11, **dadurch gekennzeichnet, dass** der Generator (10) weiterhin eine erste Finne (16), die sich von dem Hauptkörper (11) aus erstreckt, einen Ballast (17), der an einem Endabschnitt der ersten Finne (16) befestigt ist, und auch eine Vielzahl von zweiten Finnen (18) aufweist, die mit der ersten Finne (16) oder mit dem Hauptkörper (11) verbunden sind, wobei die erste Finne (16), der Ballast (17) und die zweiten Finnen (18) ausgelegt sind, den Generator (10) räumlich zu stabilisieren.

## Revendications

1. Système d'ancrage (1) pour un générateur électrique sous-marin, ledit système d'ancrage (1) comprenant un corps semi-flottant (2) et un câble d'ancrage (3) qui est associé audit corps (2) et qui est apte à relier ledit système d'ancrage (1) au générateur, ledit système d'ancrage (1) comprenant au moins un premier réservoir (5), qui s'étend le long d'un axe longitudinal (H-H) et qui est logé dans ledit corps (2), ledit au moins un premier réservoir (5) étant pourvu d'au moins une première ouverture (5') apte à permettre l'alimentation en eau dudit au moins un premier réservoir (5), et avec au moins une deuxième ouverture apte à permettre l'alimentation en air comprimé dudit au moins un premier réservoir (5) au moyen d'un système d'alimentation en air comprimé, ledit système d'ancrage (1) étant **caractérisé en ce que** ledit système d'alimentation en air comprimé comprend au moins un deuxième réservoir (6) contenant de l'air comprimé, ledit au moins un deuxième réservoir (6) étant relié audit au moins un premier réservoir (5) et étant apte à alimenter en air comprimé directement ledit au moins un premier réservoir (5), ledit au moins un deuxième réservoir (6) étant disposé autour dudit premier réservoir (5).

2. Système d'ancrage (1) selon la revendication 1, **caractérisé en ce que** ledit système d'alimentation en air comprimé comprend également une conduite d'alimentation en air comprimé (3ar) apte à alimenter en air comprimé ledit au moins un premier réservoir (5).

3. Système d'ancrage (1) selon la revendication 1 ou 2, **caractérisé en ce que** ledit au moins un premier réservoir (5) a une forme cylindrique et ledit au moins un deuxième réservoir (6) se présente sous la forme d'un faisceau tubulaire comprenant une pluralité de tubes disposés autour dudit au moins un premier réservoir (5), lesdits tubes dudit faisceau tubulaire dudit au moins un deuxième réservoir (6) ayant leurs axes longitudinaux parallèles entre eux et parallèles audit axe longitudinal (H-H) dudit au moins un premier réservoir (5).

4. Système d'ancrage (1) selon la revendication 3, **caractérisé en ce que** chacun desdits tubes dudit faisceau tubulaire dudit au moins un deuxième réservoir (6) est maintenu en position par au moins un anneau (7) qui entoure ledit au moins un premier réservoir (5), et est fixé sur la surface externe de celui-ci, la couronne circulaire dudit au moins un anneau (7) comprenant une pluralité de trous (7') aptes à loger lesdits tubes dudit au moins un deuxième réservoir (6), lesdits trous (7') étant disposés selon une configuration angulaire qui est radialement symétrique par rapport audit axe longitudinal (H-H), de sorte que lesdits tubes dudit au moins un deuxième réservoir (6) sont radialement équidistants.

5. Système d'ancrage (1) selon l'une quelconque des revendications précédentes, **caractérisé en ce qu'**il comprend une pluralité de structures support (4) aptes à assurer le support dudit système d'ancrage (1) sur un fond marin (F), lesdites structures de support (4) dépassant d'une face (S2) dudit corps (2), ladite face (S2) faisant face audit fond marin (F).

6. Système d'ancrage (1) selon la revendication 5, **caractérisé en ce que** lesdites structures support (4) font partie intégrante dudit corps (2), ou **en ce que** lesdites structures support (4) sont logées dans des trous formés dans ledit corps (2), trous dans lesquels elles sont maintenues au moyen d'un système à ressort, ou **en ce que** lesdites structures de support (4) sont télescopiques.

7. Système d'ancrage (1) selon l'une quelconque des revendications précédentes, **caractérisé en ce que** ledit câble d'ancrage (3) comprend au moins un premier câble et au moins un deuxième câble qui sont indépendants l'un de l'autre, l'un dudit premier câble et dudit deuxième câble ayant une longueur supérieure à celle de l'autre dudit premier câble et dudit deuxième câble.

8. Système d'ancrage (1) selon l'une quelconque des revendications précédentes, **caractérisé en ce qu'**il comprend un câble de commande (3op) reliant ledit système d'ancrage (1) au générateur et à une station au sol, ledit câble de commande (3op) comprenant des moyens (3s) aptes à envoyer des signaux de contrôle audit système d'ancrage (1), ainsi que des câbles (3eg) aptes à transporter l'électricité produite.

9. Système d'ancrage (1) selon les revendications 2 et 8, **caractérisé en ce que** ledit câble de commande (3op) comprend ladite conduite d'alimentation en air comprimé (3ar).

10. Système d'ancrage (1) selon l'une quelconque des revendications précédentes, **caractérisé en ce qu'**il comprend en outre des moyens de réception/transmission sans fil (TX) aptes à recevoir et envoyer sans fil des signaux, lesdits moyens de réception/transmission (TX) étant aptes à l'alimentation en air comprimé dudit au moins un premier réservoir (5) en recevant un signal de commande de valves appropriées, lesdites valves ayant un actionneur à air comprimé et/ou étant adaptées pour surveiller, commander et contrôler des paramètres de fonctionnement dudit système d'ancrage (1).

11. Installation sous-marine pour la production d'électricité comprenant au moins un générateur électrique sous-marin (10) et au moins un système d'ancrage (1) selon l'une quelconque des revendications précédentes, ledit générateur (10) étant ancré à un fond marin (F) au moyen dudit système d'ancrage (1).

12. Installation sous-marine pour la production d'énergie électrique selon la revendication 11, **caractérisée en ce que** ledit générateur (10) comprend au moins :
- un corps principal (11) qui s'étend le long d'un axe longitudinal (H'-H') définissant une cavité (11') à l'intérieur de celui-ci, et qui est pourvu de deux ouvertures (12A, 12B) opposées l'une à l'autre le long dudit axe longitudinal (H'-H'), lesdites ouvertures (12A, 12B) permettant le passage d'un écoulement de fluide dans ladite cavité (11') ;
- un corps de confinement (13) inclus dans ledit corps principal (11), ledit corps de confinement (13) s'étendant le long dudit axe longitudinal (H'-H') entre une première partie d'extrémité (13A) et une deuxième partie d'extrémité (13B), ledit corps de confinement (13) incluant à son tour au moins un alternateur ; et
- au moins une hélice (14A, 14B) qui est agencée pour tourner autour dudit corps de confinement (13) et qui provoque la rotation de l'axe de rotation dudit au moins un alternateur.

13. Installation sous-marine pour la production d'électricité selon la revendication 12, **caractérisée en ce que** ledit générateur (10) comprend une paire d'alternateurs, une première hélice (14A) et une deuxième hélice (14B), qui sont conçues pour tourner autour dudit corps de confinement (13) avec leur axe de rotation qui coïncident avec ledit axe longitudinal (H'-H'), ladite première hélice (14A) et ladite deuxième hélice (14B) étant contrarotatives.

14. Installation sous-marine pour la production d'électricité selon la revendication 13, **caractérisée en ce que** ledit générateur (10) comprend en outre une pluralité d'ailes (15) disposées entre ladite première hélice (14A) et ladite deuxième hélice (14B), lesdites ailes (15) étant formées et convenablement disposées pour permettre audit fluide de s'écouler de façon à retrouver le parallélisme avec l'axe de rotation desdites hélices (14A, 14B) tout en circulant entre lesdites hélices (14A, 14B).

15. Installation sous-marine pour la production d'électricité selon la revendication 11, **caractérisée en ce que** ledit générateur (10) comprend en outre un premier aileron (16) s'étendant depuis ledit corps principal (11), un ballast (17) fixé à une partie d'extrémité dudit premier aileron (16), ainsi qu'une pluralité de deuxièmes ailerons (18) reliés audit premier aileron (16) ou audit corps principal (11), ledit premier aileron (16), ledit ballast (17) et lesdits deuxièmes ailerons (18) étant aptes à stabiliser spatialement ledit générateur (10).
